# EUROPEAN PATENT SPECIFICATION

(11) **EP 2 172 530 B1**
(45) Date of publication and mention of the grant of the patent: **27.03.2013**
(21) Application number: 08791105.3
(22) Date of filing: 11.07.2008
(51) Int. Cl.: C09K 3/18, C08F 214/06, C08F 214/08, C08F 214/18, C08F 220/22, D06M 15/277

(54) **METHOD FOR PRODUCTION OF WATER-REPELLENT AND OIL-REPELLANT COMPOSITION, AND ARTICLE**
VERFAHREN ZUR HERSTELLUNG EINER WASSERABWEISENDEN UND ÖLABWEISENDEN ZUSAMMENSETZUNG UND ARTIKEL DARAUS
PROCÉDÉ DE FABRICATION D'UNE COMPOSITION HYDROPHOBE ET OLÉOPHOBE, ET ARTICLE CORRESPONDANT

(30) Priority: 11.07.2007 JP 2007182398
(43) Date of publication of application: 07.04.2010
(73) Proprietor: Asahi Glass Company, Limited, Chiyoda-ku Tokyo 100-8405 (JP)
(72) Inventor: HIRONO, Takao, Tokyo 100-8405 (JP); SUGIYAMA, Kazunori, Tokyo 100-8405 (JP); OOMORI, Yuuichi, Tokyo 100-8405 (JP); SHIMADA, Minako, Tokyo 100-8405 (JP)
(74) Representative: Müller-Boré & Partner Patentanwälte
(86) International application number: PCT/JP2008/062624
(87) International publication number: WO 2009/008514

(56) References cited:
- WO-A1-2006/022122
- JP-A- 06 240 201
- JP-A- 10 212 305
- JP-A- 2002 088 105
- JP-A- 2004 175 855
- US-A1- 2006 142 518

## Description

### TECHNICAL FIELD

The present invention relates to a method for producing a water/oil repellent composition, and an article treated with the water/oil repellent composition produced by the method.

### BACKGROUND ART

A method of treating an article with a water/oil repellent composition having a copolymer comprising polymerized units derived from a monomer having a polyfluoroalkyl group (hereinafter referred to as a R^{f} group) dispersed in a medium is known as a method for giving water/and oil repellency to a surface of the article (e.g. a fiber product). Such a water/oil repellent composition is required not to lose the water/oil repellency substantially even when repeatedly subjected to washing (wash durability).

As a water/oil repellent composition with excellent wash durability, the following water/oil repellent compositions have, for example, been proposed:
(1) a water/oil repellent composition containing a copolymer, as an indispensable component, which consists essentially of polymerized units derived from following monomer (a) and following monomer (b) (Patent Document 1):
   monomer (a): a monomer having a C₁₋₆ perfluoroalkyl group (hereinafter referred to as a R^{F} group), etc.;
   monomer (b): a (meth)acrylate having an alkyl group having at least 15 carbon atoms, etc.;
(2) a water/oil repellent composition containing a copolymer, as an indispensable component, which contains polymerized units derived from following monomer (a) and monomer (b) in an amount of at least 30 mass% and less than 80 mass% and further contains polymerized units derived from monomer (c) (Patent Document 2):
   monomer (a): a monomer having a C₁₋₆ R^{F} group, etc.;
   monomer (b): a monomer having no R^{f} group and having a cross-linkable functional group;
   monomer (c): at least one monomer having no R^{f} group (excluding monomer (b)), which contains the following monomer (c1) or (c2) in an amount of at least 50 mass% based on the total amount of monomer (c):
      monomer (c1): a (meth)acrylate having a C₁₆₋₄₀ alkyl group, etc.; and
      monomer (c2): a monomer, of which the glass transition point of the homopolymer is from -50°C to 40°C (excluding monomer (c1)).

However, the water/oil repellent compositions (1) and (2) have a problem such that their water/oil repellency is likely to deteriorate when they are exposed to heavy rain. Therefore, a water/oil repellent composition is desired, of which the water/oil repellency does not substantially deteriorate even when it is exposed to heavy rain, i.e. a water/oil repellent composition with heavy-rain durability is desired.
Patent Document 1: WO02/083809
Patent Document 2: WO2004/035708

### DISCLOSURE OF THE INVENTION

### OBJECT TO BE ACCOMPLISHED BY THE INVENTION

The present invention is to provide a method for producing a water/oil repellent composition which can impart water/oil repellency to a surface of an article and has excellent durability (wash durability and heavy-rain durability), and an article which has water/oil repellency and is less susceptible to deterioration of the water/oil repellency by washing or heavy rain.

### MEANS TO ACCOMPLISH THE OBJECT

The method for producing a water/oil repellent composition of the present invention is **characterized in that** it comprises polymerizing a monomer component comprising the following monomer (a) and the following monomer (b) in coexistence with the following compound (x) in a medium in the presence of a surfactant and a polymerization initiator:
monomer (a): a compound of the following formula (1):

   (Z-Y)ₙX (1)

   wherein Z is a C₁₋₆ perfluoroalkyl group, Y is a bivalent organic group or a single bond, n is 1 or 2, and X is one of groups of the following formulae (3-1) to (3-5) when n is 1, or the following formula (4-4) when n is 2;

   -CR=CH₂ (3-1)

   -C(O)OCR=CH₂ (3-2)

   -OC(O)CR=CH₂ (3-3)

   -OCH₂-ϕ-CR=CH₂ (3-4)

   -OCH=CH₂ (3-5)

   wherein R is a hydrogen atom, a methyl group or a halogen atom, and ϕ represents a phenylene group;

   -OC(O)CH=CHC(O)O- (4-4);
monomer (b): a monomer having no polyfluoroalkyl group and having a hydrocarbon group having at least 14 carbon atoms.
   compound (x): a compound of the following formula (5):

      R^{f1}-(CH₂)_{b}-Q-(CH₂)ₐ-SH (5)

      wherein R^{f1} is a C₁₋₃₀ polyfluoroalkyl group which may have -O-, -OC(O)-, -C(O)O- or -OH, Q is a bivalent organic group or a single bond, a is an integer of from 1 to 20, and b is an integer of from 0 to 20.

The above Q is preferably -C(O)O-, -OC(O)-, -C(O)N(R¹)-, -SO₂N(R¹)- or a single bond, wherein R¹ is a hydrogen atom or a C₁₋₄ alkyl group.

The above surfactant preferably comprises a nonionic surfactant and a cationic surfactant.

The above polymerization initiator is preferably a radical polymerization initiator.

The above monomer component preferably further contains the following monomer (c):
monomer (c): at least one selected from the group consisting of vinyl halide, vinylidene halide and a monomer of the following formula (6):

   CH₂=CHR²-OC(O)R³ (6)
wherein R² is a hydrogen atom or a methyl group, and R³ is a C₁₋₈ alkyl group.

The above monomer component preferably further contains the following monomer (d):
monomer (d): a monomer having no R^{f} group and having a crosslinkable functional group.

The proportions of the respective monomers are preferably such that the monomer (a) is from 10 to 100 mass%, the monomer (b) is from 0 to 90 mass%, the monomer (c) is from 0 to 30 mass%, and the monomer (d) is from 0 to 20 mass%, in the monomer component (100 mass%).

The amount of the compound (x) is preferably from 0.1 to 10 parts by mass, the amount of the surfactant is preferably from 1 to 6 parts by mass, and the amount of the polymerization initiator is preferably from 0.1 to 1.0 parts by mass, per 100 parts by mass of the monomer component.

The article of the present invention is an article treated with the water/oil repellent composition produced by the method of the present invention.

### EFFECTS OF THE INVENTION

By the method of this invention for producing a water/oil repellent composition, it is possible to produce a water/oil repellent composition which can impart water/oil repellency to a surface of an article and has excellent durability (wash durability and heavy-rain durability).

The article of this invention has water/oil repellency and is less susceptible to deterioration of the water/oil repellency by washing or heavy rain.

### BEST MODE FOR CARRYING OUT THE INVENTION

In this specification, a compound represented by the formula (1) is referred to as compound (1). The same applies to compounds represented by other formulae. And, in this specification, a group represented by the formula (2) is referred to as group (2). The same applies to groups represented by in other formulae. And, a (meth)acrylate in this specification means an acrylate or a methacrylate. And, a monomer in this specification means a compound having a polymerizable unsaturated group. In addition, in this specification, an R^{f} group is an alkyl group having all or some of its hydrogen atoms substituted by fluorine atoms, and an R^{F} group is an alkyl group having all of its hydrogen atoms substituted by fluorine atoms.

### <Method for producing water/oil repellent composition>

The method for producing a water/oil repellent composition of the present invention comprises polymerizing a monomer component comprising monomer (a) and monomer (b) in coexistence with compound (x) in a medium in the presence of a surfactant and a polymerization initiator to obtain a dispersion of a (co)polymer.

The (co)polymer of the present invention means a polymer of types of monomers.

The polymerization method may, for example, be dispersion polymerization, emulsion polymerization, or suspension polymerization.

The method for producing the water/oil repellent composition of the present invention is preferably a method which comprises emulsion polymerizing a monomer component 7 in coexistence with compound (x) in an aqueous medium in the presence of a surfactant and a polymerization initiator to obtain an emulsion of a (co)polymer.

From the viewpoint of yield improvement of the (co)polymer, it is preferable to pre-emulsify a mixture containing a monomer component, composition (x), a surfactant, and an aqueous medium before emulsion polymerization. For example, a mixture containing a monomer component 7, compound (x), a surfactant and an aqueous medium are mixed and dispersed by a homomixer or a high-pressure emulsification equipment.

### (Monomer component)

The monomer component contains monomer (a) and monomer (b) as an indispensable component, and also contains monomers (c) to (e) as necessary.

### Monomer (a):

Monomer (a) is compound (1):

(Z-Y)ₙX (1)

wherein Z represents a C₁₋₆ R^{F} group, more preferably a C₄₋₆ R^{F} group. The R^{F} group may have a straight chain structure or branched structure, preferably a straight chain structure.

The following groups may be mentioned as examples of Z:

F(CF₂)₄-,

F(CF₂)₅-,

F(CF₂)₆-,

(CF₃)₂CF(CF₂)₂-,

Y is a bivalent organic group or a single bond.

The bivalent organic group is preferably an alkylene group. The alkylene group may have a straight chain structure or branched structure. The alkylene group may have -O-, -NH-, -C(O)-, -SO₂-, -CD¹=CD²- (wherein each of D¹ and D² which are independent of each other, is a hydrogen atom or a methyl group), etc.

The following groups may be mentioned as examples of Y:

-CH₂-,

-CH₂CH₂-,

-(CH₂)₃-,

-CH₂CH₂CH(CH₃)-,

-CH=CH-CH₂-,etc.

n is 1 or 2.
X is one of groups (3-1) to (3-5) when n is 1, and group (4-4) when n is 2;

-CR=CH₂ (3-1)

-C(O)OCR=CH₂ (3-2)

-OC(O)CR=CH₂ (3-3)

-OCH₂-ϕ-CR=CH₂ (3-4)

-OCH=CH₂ (3-5)

where R is a hydrogen atom, a methyl group or a halogen atom and ϕ is a phenylene group;

-OC(O)CH=CHC(O)O- (4-4)

From a viewpoint of the polymerizability with other monomers, flexibility of a film of the (co)polymer, adherence property of the (co)polymer to an article, solubility in a medium, ease of emulsion polymerization, etc., compound (1) is preferably a (meth)acrylate having a C₁₋₆ R^{F} group, further preferably a methacrylate having a C₁₋₆ R^{F} group, particularly preferably a methacrylate having a C₄₋₆ R^{F} group.

### Monomer (b):

Monomer (b) is a monomer which has no R^{f} group and has a hydrocarbon group having at least 14 carbon atoms. When the hydrocarbon group has at least 14 carbon atoms, a water/oil repellent composition has excellent heavy-rain durability and wash durability.

Monomer (b) may, for example, be a (meth)acrylate, a vinyl ether, or a vinyl ester.

Monomer (b) is preferably a monomer having a C₁₆₋₄₀ saturated hydrocarbon group, more preferably a (meth)acrylate having a C₁₆₋₄₀ alkyl group, particularly preferably stearyl (meth)acrylate or behenyl (meth)acrylate.

### Monomer (c):

Monomer (c) is a monomer selected from the group consisting of a vinyl halide, a vinylidene halide and a monomer of the following formula (6):

CH₂=CR²-OC(O)R³ (6)

wherein R² is a hydrogen atom or a methyl group, and R³ is a C₁₋₈ alkyl group.

When a copolymer has polymerized units derived from monomer (c), the water/oil repellent composition is improved in adhesion to a material, whereby it has better wash durability as well as better heavy-rain durability.

Monomer (c) may, for example, be vinyl acetate, vinyl propionate, vinyl chloride, vinyl fluoride, vinylidene chloride or vinylidene fluoride, and is preferably vinyl acetate, vinyl chloride or vinylidene chloride.

### Monomer (d):

Monomer (d) is a monomer having no R^{f} group and having a crosslinkable functional group.

When the copolymer has polymerized units based on monomer (d), the durability (washing durability and heavy-rain durability) of the water/oil repellent composition will be further improved.

The crosslinkable functional group is preferably a functional group having at least one of a covalent bond, an ionic bond and a hydrogen bond, or a functional group which is capable of forming a crosslinked structure by interaction between such bonds.

The followings are preferred examples of such functional groups: an isocyanate group, a blocked isocyanate group, an alkoxysilyl group, an amino group, an alkoxymethylamide group, a silanol group, an ammonium group, an amide group, an epoxy group, a hydroxy group, an oxazoline group, a carboxy group, an alkenyl group, and a sulfonic acid group. An epoxy group, a blocked isocyanate group, a hydroxy group, an alkoxysilyl group, an amino group, or a carboxy group is particularly preferred.

Monomer (d) is preferably a (meta)acrylate, an acrylamide, a vinyl ether or a vinyl ester.

The following compounds may be mentioned as examples of monomer (d):
2-isocyanatoethyl (meth)acrylate, 3-isocyanatopropyl (meth)acrylate, 4-isocyanatobutyl (meth)acrylate, a 2-butanone oxime adduct of 2-isocyanatoethyl (meth)acrylate, a pyrazole adduct of 2-isocyanatoethyl (meth)acrylate, a 3,5-dimethylpyrazole adduct of 2-isocyanatoethyl (meth)acrylate, a 3-methylpyrazole adduct of 2-isocyanatoethyl (meth)acrylate, an ε-caprolactam adduct of 2-isocyanatoethyl (meth)acrylate, a 2-butanone oxime adduct of 3-isocyanatopropyl (meth)acrylate, a pyrazole adduct of 3-isocyanatopropyl (meth)acrylate, and a block body of methylethylketoxime of an isophorone diisocyanate adduct of 2-hydroxy methacrylate;
a 3,5-dimethylpyrazole adduct of 3-isocyanatopropyl (meth)acrylate, a 3-methylpyrazole adduct of 3-isocyanatopropyl (meth)acrylate, an ε-caprotactam adduct of 3-isocyanatopropyl (meth)acrylate, a 2-butanone oxime adduct of 4-isocyanatobutyl (meth)acrylate, a pyrazole adduct of 4-isocyanatobutyl (meth)acrylate, a 3,5-dimethylpyrazole adduct of 4-isocyanatobutyl (meth)acrylate, a 3-methylpyrazole adduct of 4-isocyanatobutyl (meth)acrylate, and an ε-caprolactam adduct of 4-isocyanatobutyl (meth)acrylate;
Methoxymethyl (meth)acrylamide, ethoxymethyl (meth)acrylamide, butoxymethyl (meth)acrylamide, diacetone acrylamide, γ-methacryloyloxypropyltrimethoxysilane, trimethoxyvinylsilane, vinyltrimethoxysilane, dimethylaminoethyl (meth)acrylate, diethylaminoethyl (meth)acrylate, dimethylaminopropyl (meth)acrylate, (meth)acryloylmorpholine, (meth)acryloyloxyethyltrimethylammonium chloride, (meth)acryloyloxypropyltrimethylammonium chloride, (meth)acrylamideethyltrimethylammonium chloride, and (meth)acrylamidepropyltrimethylammonium chloride;
t-butyl(meth)acrylamide sulfonic acid, (meth)acrylamide, N-methyl(meth)acrylamide, N-methylol(meth)acrylamide, N-butoxymethyl(meth)acrylamide, diacetone(meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, a polyoxyalkylene glycol mono(meth)acrylate, (meth)acrylic acid, 2-(meth)acryloylxyethylsuccinic acid, 2-(meth)acryloylxyhexahydrophthalic acid, 2-(meth)acryloyloxyethyl acid phosphate, allyl (meth)acrylate, 2-vinyl-2-oxazoline, 2-vinyl-4-methyl-(2-vinyloxazoline), a polycaprolactone ester of hydroxyethyl (meth)acrylate, triallyl cyanurate, and triallyl isocyanurate; and
a monofunctional polyoxyalkylene (meth)acrylate (the oxyalkylene group is one type or a combination of two types selected from the group consisting of an oxyethylene group, an oxypropylene group, an oxybutylene group and an oxytetramethylene group, and it may be a block copolymer or a random copolymer); a difunctional polyoxyethylene di(meth)acrylate (the oxyalkylene group is one type or a combination of two types selected from the group consisting of an oxyethylene group, an oxypropylene group, an oxybutylene group and an oxytetramethylene group, and it may be a block copolymer or a random copolymer); and ethylene glycol di(meth)acrylate.

### Monomer (e):

Monomer (e) is a monomer other than monomer (a), monomer (b), monomer (c), and monomer (d).

The following compounds may be mentioned as examples of monomer (e):
Methyl acrylate, ethyl acrylate, propyl acrylate, butyl methacrylate, cyclohexyl acrylate, 2-ethylhexyl (meth)acrylate, butyl methacrylate, n-hexyl (meth)acrylate, butene, isoprene, butadiene, ethylene, propylene, vinyl ethylene, pentene, ethyl-2-propylene, butylethylene, cyclohexylpropylethylene, decylethylene, dodecylethylene, hexene, isohexylethylene, neopentylethylene, (1,2-diethoxycarbonyl)ethylene, (1,2-dipropoxycarbonyl)ethylene, methoxyethylene, ethoxyethylene, butoxyethylene, 2-methoxypropylene, pentyloxyethylene, cyclopentanoyloxyethylene, cyclopentylacetoxyethylene, styrene, α-methylstyrene, p-methylstyrene, hexylstyrene, octylstyrene, nonylstyrene, and chloroprene;
N,N,-dimethyl(meth)acrylamide, a vinylalkyl ether, an alkyl halide vinyl ether, a vinylalkyl ketone, butyl acrylate, propyl methacrylate, benzyl (meth)acrylate, octyl (meth)acrylate, decyl methacrylate, dodecyl acrylate, cyclododecyl acrylate, lauryl (meth)acrylate, 3-ethoxypropyl acrylate, methoxy-butyl acrylate, 2-ethylbutyl acrylate, 1,3-dimethylbutyl acrylate, 2-methylpentyl acrylate, aziridinylethyl (meth)acrylate, and 2-ethylhexylpolyoxyalkylene (meth)acrylate; and
an alkyl crotonate, an alkyl maleate, an alkyl fumarate, an alkyl citraconate, an alkyl mesaconate, maleic anhydride, allyl acetate, N-vinylcarbazole, maleimide, N-methylmaleimide, a (meth)acrylate having a silicone in its side chain, a (meth)acrylate having an urethane bond, a (meth)acrylate having a polyoxy alkylene chain with a terminal C₁₋₄ alkyl group, an alkylene di(meth)acrylate, etc.

### (Compound (x))

Compound (x) is compound (5).

R^{f1}-(CH₂)_{b}-Q-(CH₂)ₐ-SH (5)

wherein R^{f1} is a C₁₋₃₀ R^{f} group.

R^{f1} may have -O- between a carbon-carbon bond, have some of -CH₂-, -CFH- or -CF₂- substituted by -OC(O)- or -C(O)O-, or have some of hydrogen atoms or fluorine atoms substituted by -OH.

The R^{f1} group may have a straight chain structure or a branched structure.

From a viewpoint of solubility in a medium and ease of emulsion polymerization, the R^{f1} is preferably a R^{f} group having a proportion of fluorine atoms given by the following formula of at least 60%, more preferably a R^{f} group having such a proportion of fluorine atoms of at least 80%, further preferably a C₁₋₁₈ R^{F} group, particularly preferably a C₁₋₆ R^{F} group.

Proportion of fluorine atoms = [(number of fluorine atoms in a R^{f} group / number of hydrogen atoms in a corresponding alkyl group having the same number of carbon atoms)] x 100

Q is a bivalent organic group or a single bond.

The followings may be mentioned as the bivalent organic group:
- C(O)O-, -OC(O)-, -C(O)N(R¹)-, -SO₂N(R¹)-, -O-, -S-, -NH-, -SO₂-, -CH=CH-, -CH=N-, -N=N-, -N(O)=N-, -C(O)S-, -C(O)CH₂-, -CH₂CH₂-, -CH₂-, -CH₂CH₂O-, -CH₂O-, -CH₂NH-, -CH₂-, -CO-, -CH=CH-C(O)O-, -CH=CH-C(O)-, an alkylene group, an alkenylene group, an oxyalkylene group, a bivalent alicyclic hydrocarbon group or its condensed ring, a bivalent aromatic hydrocarbon group or its condensed ring, and a bivalent heterocyclic group or its condensed ring, wherein R¹ is a hydrogen atom or a C₁₋₄ alkyl group.

Q is preferably -C(O)-, -OC(O)-, -C(O)N(R¹)-, -SO₂N(R¹)- or a single bond.
a is an integer of from 1 to 20, preferably an integer of from 1 to 4.
b is an integer of from 0 to 20, preferably an integer of from 0 to 4.

Compound (5-1) is also preferred as compound (5).

R^{f1}-(CH₂)ₐ-SH (5-1)

wherein a is an integer of from 1 to 20, and R^{f1} is the same as the above.

The followings may be specifically mentioned as examples of compound (5):

C₆F₁₃CH₂CH₂OC(O)CH₂SH,

C₆F₁₃CH₂CH₂SH,

C₆F₁₃SH, C₈F₁₇SH,

C₆F₁₃CH₂CH₂SH,

C₈F₁₇CH₂CH₂SH,

C₆F₁₃CH₂CH₂OC(O)CH₂SH,

C₈F₁₇CH₂CH₂OC(O)CH₂SH,

C₆F₁₃C(O)OCH₂CH₂SH and

C₈F₁₇C(O)OCH₂CH₂SH.

### (Surfactant)

The surfactant may be a hydrocarbon surfactant or a fluorinated surfactant, and, each of them includes an anionic surfactant, an nonionic surfactant, a cationic surfactant and a zwitterizonic surfactant.

From the viewpoint of dispersing stability, the surfactant is preferably a combination of a nonionic surfactant and a cationic surfactant, or an anionic surfactant alone, more preferably a combination of a nonionic surfactant and a cationic surfactant.

The ratio of a nonionic surfactant to a cationic surfactant (a nonionic surfactant / a cationic surfactant) is preferably from 97/3 to 40/60 (mass ratio), more preferably from 95/5 to 50/50.

In a specific combination of a nonionic surfactant and an cationic surfactant, their total amount in the (co)polymer (100 mass%) can be adjusted to be at most 5 mass%, whereby hydrophilicity of the water/oil repellent composition is reduced to give excellent water repellency to an article.

The nonionic surfactant is preferably at least one member selected from the group of surfactants s¹, s², s³, s⁴, s⁵ and s⁶.

### Surfactant s¹:

Surfactant s¹ may, for example, be a polyoxyalkylene monoalkyl ether, a polyoxyalkylene monoalkenyl ether, a polyoxyalkylene monoalkapolyenyl ether or a polyoxyalkylene monopolyfluoroalkyl ether.

Surfactant s¹ is preferably a polyoxyalkylene monoalkyl ether, a polyoxyalkylene monoalkenyl ether or a polyoxyalkylene monopolyfluoroalkyl ether. As s¹, one of such surfactants may be used alone, or two or more of them may be used in combination.

An alkyl group, an alkenyl group, an alkapolyenyl group or a polyfluoroalkyl group (hereinafter collectively referred to as an R^{S} group) preferably has from 4 to 26 carbon atoms. The R^{S} group may have a straight chain structure or a branched structure. The branched-structured R^{S} group is preferably a secondary alkyl group, a secondary alkenyl group or a secondary alkapolyenyl group. A part or all of the hydrogen atoms of the R^{S} group may be substituted by fluorine atoms.

Specific examples of the R^{S} group include an octyl group, an dodecyl group, a tetradecyl group, a hexadecyl group, a stearyl group (octadecyl group), a behenyl group (docosyl group), an oleyl group (9-octadecenyl group), a heptadecylfluorooctyl group, a tridecylfluorohexyle group, 1H,1H,2H,2H-tridecylfluorooctyl group, and a 1H,1 1H,2H,2H-nonafluorohexyl group.

A polyoxyalkylene (hereinafter referred to as POA) chain is preferably a catenated chain consisting of two or more of polyoxyethylene (hereinafter referred to as POE) chains and/or polyoxypropylene (hereinafter referred to as POP) chains. The POA chain may consists of one type of POA chains or two or more types of POA chains. When the POA chain consists of two or more types of POA chains, such POA chains are preferably linked to form blocks.

Surfactant s¹ is more preferably compound (s¹¹):

R¹⁰O[CH₂CH(CH₃)O]ₛ-(CH₂CH₂O)ᵣH (s¹¹)

wherein R¹⁰ is an alkyl group having at least 8 carbon atoms or an alkenyl group having at least 8 carbon atoms, r is an integer of from 5 to 50, and s is an integer of from 0 to 20. Some of the hydrogen atoms of the R¹⁰may be substituted by fluorine atoms.

When r is at least 5, the surfactant is soluble in water and homogeneously soluble in an aqueous medium, thus the water/oil repellent composition has good penetrating properties to an article. When r is at most 50, its hydrophilicity is suppressed and water repellency will be good.

When s is at most 20, the surfactant is soluble in water and homogeneously soluble in an aqueous medium, thus the water/oil repellent composition has good penetrating properties to an article.

When r and s are at least 2, the POE chains and the POP chains are linked to form blocks.

R¹⁰ is preferably a straight chain or a branched chain.
r is preferably an integer of from 10 to 30.
s is preferably an integer of from 0 to 10.

The followings compounds may be mentioned as examples of compound (s¹¹), wherein the POE chains and the POP chains are linked in block form:

C₁₈H₃₇O[CH₂CH(CH₃)O]₂-(CH₂CH₂O)₃₀H,

C₁₈H₃₅O-(CH₂CH₂O)₃₀H,

C₁₆H₃₃O[CH₂CH(CH₃)O]₅-(CH₂CH₂O)₂₀H,

C₁₂H₂₅O[CH₂CH(CH₃)O]₂-(CH₂CH₂O)₁₅H,

(C₈H₁₇)(C₆H₁₃)CHO-(CH₂CH₂O)₁₅H,

C₁₀H₂₁O[CH₂CH(CH₃)O]₂-(CH₂CH₂O)₁₅H,

C₆F₁₃CH₂CH₂O-(CH₂CH₂O)₁₅H,

C₆F₁₃CH₂CH₂O[CH₂CH(CH₃)O]₂-(CH₂CH₂O)₁₅H, and

C₄F₉CH₂CH₂O[CH₂CH(CH₃)O]₂-(CH₂CH₂O)₁₅H.

### Surfactant s²:

Surfactant s² is a nonionic surfactant made of a compound having at least one carbon-carbon triple bond and at least one hydroxy group in its molecule.

Surfactant s² is preferably a nonionic surfactant made of a compound having one carbon-carbon triple bond and one or two hydroxy group(s) in its molecule.

Surfactant s² may have a POA chain in the molecule. The POA chain may, for example, be a POE chain, a POP chain, a chain wherein POE chains and POP chains are linked in a random manner, or a chain wherein POE chains and POP chains are linked in block form.

Surfactant s² is preferably compounds (s²¹) to (s²⁴):

HO-CR¹¹R¹²-C≡C-CR¹³R¹⁴-OH (s²¹)

HO-(A¹O)ᵤ-CR¹¹R¹²-C≡C-CR¹³R¹⁴-(OA²)ᵥ-OH (s²²)

HO-CR¹⁵R¹⁶-C≡C-H (s²³)

HO-(A³O)_{w}-CR¹⁵R¹⁶-C≡C-H (s²⁴)

Each of A¹ to A³ which are independent of one another, is an alkylene group.

Each of u and v is an integer of at least 0, and (u + v) is an integer of at least 1. w is at least 1.

When each of u, v and w is at least 2, the plurality of each of A¹, A² and A³ may be the same or different, respectively.

A POA chain is preferably a POE chain, a POP chain or a chain containing a POE chain and a POP chain. The number of repeating units of a POA chain is preferably 1 to 50.

Each of R¹¹ to R¹⁶ which are independent of one another, is a hydrogen atom or an alkyl group.

The alkyl group is preferably a C₁₋₁₂ alkyl group, and more preferably a C₁₋₄ alkyl group. The alkyl group may, for example, be a methyl group, an ethyl group, a propyl group, a butyl group, or an isobutyl group.

Compound (s²²) is preferably compound (s²⁵); 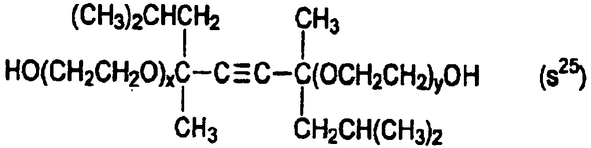 wherein each of x and y is an integer of from 0 to 100.

One of compound (s²⁵) may be used alone, or two or more of them may be used in combination.

Compound (s²⁵) is preferably a compound wherein both x and y are 0, sum of x and y is from 1 to 4, or the average of sum of x and y is from 10 to 30. Surfactant s³:
Surfactant s³ is a nonionic surfactant made of a compound, wherein a POE chain and a POA chain consisting of consecutively-connected two or more oxyalkylene having at least 3 carbon atoms are catenated, and both two terminals are hydroxy groups.

A polyoxytetramethylene (hereinafter referred to as POT) and/or a POP chain is preferred as such a POA chain.

Surfactant s³ is preferably compound (s³¹) or compound (s³²):

HO(CH₂CH₂O)_{g1}(C₃H₆O)ₜ(CH₂CH₂O)_{g2}H (s³¹)

HO(CH₂CH₂O)_{g1}(CH₂CH₂CH₂CH₂O)ₜ(CH₂CH₂O)_{g2}H (s³²)

g1 is an integer of from 0 to 200.

t is an integer of from 2 to 100.

g2 is an integer of from 0 to 200.

When g1 is 0, g2 is an integer of at least 2. When g2 is 0, g1 is an integer of at least 2.

-C₃H₆- may be -CH(CH₃)CH₂-, -CH₂CH(CH₃)-, or mixture of -CH(CH₃)CH₂- and -CH₂CH(CH₃)-.

The POA chains are in block form.

The following compounds may be mentioned as examples of surfactant s³:

HO-(CH₂CH₂O)₁₅-(C₃H₆O)₃₅-(CH₂CH₂O)₁₅H,

HO-(CH₂CH₂O)₈-(C₃H₆O)₃₅-(CH₂CH₂O)₈H,

HO-(CH₂CH₂O)₄₅-(C₃H₆O)₁₇-(CH₂CH₂O)₄₅H, and

HO- (CH₂CH₂O)₃₄- (CH₂CH₂CH₂CH₂O)₂₈- (CH₂CH₂O)₃₄H.

### Surfactant s⁴:

Surfactant s⁴ is a nonionic surfactant having an amine-oxide portion in the molecule.

Surfactant s⁴ is preferably compound (s⁴¹);

(R¹⁷) (R¹⁸) (R¹⁹)N(→O) (s⁴¹)

wherein each of R¹⁷ to R¹⁹ which are independent of one another, is a C₁₋₂₄ monovalent hydrocarbon group.

A surfactant having an amine oxide (N→O) is regarded as the nonionic surfactant in the present invention.

One of compound (s⁴¹) may be used alone, or two or more of them may be used in combination.

Compound (s⁴¹) is preferably compound (s⁴²) from the viewpoint of dispersion stability of the copolymer;

(R²⁰)(CH₃)₂N(→C) (s⁴²)

wherein R²⁰ is a C₆₋₂₂ alkyl group, a C₆₋₂₂ alkenyl group, a phenyl group combined with a C₆₋₂₂ alkyl group, a phenyl group combined with a C₆₋₂₂ alkenyl group, or a C₆₋₁₃ fluoroalkyl group. R²⁰ is preferably a C₈₋₂₂ alkyl group, a C₈₋₂₂ alkenyl group or a C₄₋₉ polyfluoroalkyl group.

The following compounds may be mentioned as examples of compound (s⁴²):

[H(CH₂)₁₂](CH₃)₂N(→O),

[H(CH₂)₁₄](CH₃)₂N(→O),

[H(CH₂)₁₆](CH₃)₂N(→O),

[H(CH₂)₁₈](CH₃)₂N(→O),

[F(CF₂)₆(CH₂)₂](CH₃)₂N(→O), and

[F(CF₂)₄(CH₂)₂](CH₃)₂N(→O).

### Surfactant s⁵:

Surfactant s⁵ is a nonionic surfactant made of a polyoxyethylene mono(substituted phenyl) ether condensate or a polyoxyethylene mono(substituted phenyl) ether.

The substituted phenyl group is preferably a phenyl group substituted by a C₇₋₂₄ monovalent hydrocarbon group, and more preferably a phenyl group substituted by an alkyl group, an alkenyl group or a styryl group.

Surfactant s⁵ is preferably a polyoxyethylene mono(alkylphenyl) ether condensate, a polyoxyethylene mono(alkenylphenyl) ether condensate, a polyoxyethylene mono(alkylphenyl) ether, a polyoxyethylene mono(alkenylphenyl) ether, or a polyoxyethylene mono[(alkyl)(styryl)phenyl] ether.

The polyoxyethylene mono(substituted phenyl) ether condensate or polyoxyethylene mono(substituted phenyl) ether may, for example, be a formaldehyde condensate of polyoxyethylene mono(nonylphenyl) ether, polyoxyethylene mono(nonylphenyl) ether, polyoxyethylene mono(octylphenyl) ether, polyoxyethylene mono(oleylpheyl) ether, polyoxyethylene [(nonyl)(styryl)phenyl] ether, or polyoxyethylene mono[(oleyl)(styryl)phenyl] ether.

### Surfactant s⁶:

Surfactant s⁶ is a nonionic surfactant made of a fatty acid ester of a polyol.

The polyol represents glycerin, sorbitan, sorbit, polyglycerin, polyethylene glycol, polyoxyethylene glyceryl ether, polyoxyethylene sorbitan ether, polyoxyethylene sorbit ether, etc.

Surfactant s⁶ may, for example, be an ester derived from stearic acid and polyethylene glycol in 1:1 molar ratio, an ester derived from an ether of sorbit and polyethylene glycol, and oleic acid in 1:4 molar ratio, an ester derived from an ether of polyoxyethylene glycol and sorbitan, and stearic acid in 1:1 molar ratio, an ester derived from an ether of polyethylene glycol and sorbitan, and oleic acid in 1:1 molar ratio, an ester derived from dodecanoic acid and sorbitan in 1:1 molar ratio, an ester derived from oleic acid and decaglycerin in 1:1 or 2:1 molar ratio, and an ester derived from stearic acid and decaglycerin in 1:1 or 2:1 molar ratio.

### Surfactant s⁷:

When the surfactant contains a cationic surfactant, surfactant s⁷ is preferred as such a cationic surfactant.

Surfactant s⁷ is a cationic surfactant of a substituted ammonium salt form.

Surfactant s⁷ is preferably an ammonium salt, wherein at least one hydrogen atom connected to the nitrogen atom is substituted by an alkyl group, an alkenyl group or a POA chain having a hydroxy group at the terminal, and is more preferably compound (s⁷¹);

[(R²¹)₄N⁺]-X⁻ (s⁷¹)

wherein R²¹ is a hydrogen atom, a C₁₋₂₂ alkyl group, a C₂₋₂₂ alkenyl group, a C₁₋₉ fluoroalkyl group, or a POA chain having a hydroxy group at the terminal.

The four R²¹ may be the same or different, however, all of the four R²¹ are not hydrogen atoms at the same time.

R²¹ is preferably a C₆₋₂₂ long-chain alkyl group, a C₆₋₂₂ long-chain alkenyl group, or a C₁₋₉ fluoroalkyl group.

When R²¹ is an alkyl group other than a long-chain alkyl group, the R²¹ is preferably a methyl group or an ethyl group.

When R²¹ is a POA chain having a hydroxy group at the terminal, the POA chain is preferably a POE chain.

X- is a counter ion.

X- is preferably a chloride ion, an ethylsulfate ion or an acetate ion.

Compound (s⁷¹) may, for example, be monostearyltrimethylammonium chloride, monostearyldimethylmonoethylammonium ethylsulfate, mono(stearyl)monomethyldi(polyethylene glycol)ammonium chloride, monofluorohexyltrimethylammonium chloride, di(tallow alkyl)dimethylammonium chloride, or dimethyl mono coconut amine acetate.

### Surfactant s⁸:

When the surfactant contains a zwitterizonic surfactant, surfactant s⁸ is preferred as such a surfactant.

Surfactant s⁸ may, for example, be alanine, imidazolinium betaine, amidebetaine or betaine acetate.

The hydrophobic group of the surfactant s⁸ is preferably a C₆₋₂₂ long-chain alkyl group, a C₆₋₂₂ long-chain alkenyl group, or a C₁₋₉ fluoroalkyl group.

Surfactant s⁸ may, for example, be dodecylbetaine, stearylbetaine, dodecylcarboxymethylhydroxyethyl imidazolinium betaine, dodecydimethylaminoacetate betaine, or fatty acid amidepropyl dimethylaminoacetate betaine.

### Surfactant s⁹:

Surfactant s⁹ may used as the surfactant.

Surfactant s⁹ is a polymeric surfactant made of a block copolymer, a random copolymer or a hydrophobically modified body of a hydrophilic copolymer derived from a hydrophilic monomer and a hydrophobic hydrocarbon and/or a fluoro monomer.

Surfactant s⁹ may, for example, be a block or random copolymer derived from polyethylene glycol (meth)acrylate and a long-chain alkyl acrylate, a block or random copolymer derived from polyethylene glycol (meth)acrylate and a fluoro (meth)acrylate, a block or random copolymer derived from vinyl acetate and a long-chain alkyl vinyl ether, a block or random copolymer derived from vinyl acetate and a long-chain alkylvinyl ester, a polymer derived from styrene and maleic anhydride, a condensate of polyvinyl alcohol and stearic acid, a condensate of polyvinyl alcohol and stearyl mercaptan, a condensate of polyallylamine and stearic acid, a condensate of polyethyleneimine and stearyl alcohol, methylcellulose, hydroxypropylmethylcellulose, or hydroxyethylmethylcellulose.

Examples of a commercial product of surfactant s⁹ include MP Polymer (item code: MP-103, MP-203) manufactured by Kurary Co., Ltd., SMA resins manufactured by Elf Atochem Inc., METOLOSE manufactured by Shin-Etsu Chemical Co., Ltd., EPOMIN RP manufactured by NIPPON SHOKUBAI Co., Ltd., and Surflon (item code: S-381, S-393) manufactured by AGC Seimi Chemical Co., Ltd.

Surfactant s⁹ is preferably surfactant s⁹¹ when the solvent is organic, or the organic content in the solvent is high;

Surfactant s⁹¹: a polymeric surfactant made of a block or random copolymer of a lipophilic monomer and a fluoromonomer.

Surfactant s⁹¹ may, for example, be a copolymer derived from an alkyl acrylate and fluoro (meth)acrylate, or a copolymer derived from an alkylvinylether and a fluoroalkylvinylether.

Examples of a commercial product of surfactant s⁹¹ include Surflon (item code: S-383, SC-100 series) manufactured by AGC Seimi Chemical Co., Ltd.

From the viewpoint of excellence in water repellency and durability of the water/oil repellent composition, combination of the surfactants is preferably a combination of surfactant s¹, surfactant s² and surfactant s⁷; a combination of surfactant s¹, surfactant s³ and surfactant s⁷; or a combination of surfactant s¹, surfactant s², surfactant s³ and surfactant s⁷, more preferably such combinations wherein surfactant s⁷ is compound (s⁷¹).

### (Medium)

The medium may, for example, be water, an alcohol, a glycol, a glycol ether, a halogen compound, a hydrocarbon, a ketone, an ester, an ether, a nitrogenous compound, a sulfur compound, an inorganic solvent, or an organic acid. Among them, at least one selected from the group consisting of water, an alcohol, a glycol, a glycol ether and a glycol ester is preferred from the viewpoint of solubility and ease in handling.

The alcohol may, for example, be methanol, ethanol, 1-propanol, 2-propanol, 1-butanol, 2-butanol, 2-methylpropanol, 1,1-dimethylethanol, 1-pentanol, 2-pentanol, 3-pentanol, 2-methyl-1-butanol, 3-methyl-1-butanol, 1,1-dimethylpropanol, 3-methyl-2-butanol, 1,2-dimethylpropanol, 1-hexanol, 2-methyl-1-pentanol, 4-methyl-2-pentanol, 2-ethyl-1-butanol, 1-heptanol, 2-heptanol, or 3-heptanol.

The glycol may, for example, be ethylene glycol, ethylene glycol monomethyl ether, ethylene glycol monoethyl ether, ethylene glycol monobutyl ether, ethylene glycol monomethyl ether acetate, ethylene glycol monoethyl ether acetate, ethylene glycol monobutyl ether acetate, or propylene glycol. The glycol ether may, for example, be propylene glycol monomethyl ether, propylene glycol monoethyl ether, propylene glycol dimethyl ether, dipropylene glycol, dipropylene glycol monomethyl ether, dipropylene glycol dimethyl ether, dipropylene glycol monoethyl ether, tripropylene glycol, tripropylene glycol monomethyl ether, polypropylene glycol, or hexylene glycol.

The halogen compound may, for example, be a halogenated hydrocarbon, or a halogenated ether.

The halogenated hydrocarbon may, for example, be a hydrochlorofluorocarbon, a hydrofluorocarbon, or a hydrobromocarbon.

The halogenated ether may, for example, be a hydrofluoro ether.

The hydrofluoro ether may, for example, be a separated-type hydrofluoro ether or a non-separated-type hydrofluoro ether. The separated-type hydrofluoro ether is a compound wherein an R^{F} or perfluoroalkylene group, and an alkyl or alkylene group, are connected via an etheric oxygen atom. The non-separated-type hydrofluoro ether is a hydrofluoro ether having a partially fluorinated alkyl or alkylene group.

The hydrocarbon may, for example, be an aliphatic hydrocarbon, an alicyclic hydrocarbon, or an aromatic hydrocarbon.

The aliphatic hydrocarbon may, for example, be pentane, 2-methylbutane, 3-methylpentane, hexane, 2,2-dimethylbutane, 2,3-dimethylbutane, heptane, octane, 2,2,4-trimethylpentane, 2,2,3-trimethylhexane, decane, undecane, dodecane, 2,2,4,6,6-pentamethylheptane, tridecane, tetradecane, or hexadecane.

The alicyclic hydrocarbon may, for example, be cyclopentane, methylcyclopentane, cyclohexane, methylcyclohexane, or ethylcyclohexane.

The aromatic hydrocarbon may, for example, be benzene, toluene, or xylene.

The ketone may, for example, be acetone, methyl ethyl ketone, 2-pentanone, 3-pentanone, 2-hexanone, or methyl isobutyl ketone.

The ester may, for example, be methyl acetate, ethyl acetate, butyl acetate, methyl propionate, methyl lactate, ethyl lactate, or pentyl lactate.

The ether may, for example, be diisopropyl ether, dioxane, or tetrahydrofuran.

The nitrogenous compound may, for example, be pyridine, N,N-dimethylformaldehyde, N,N-dimethylacetamide, or N-methylpyrrolidone.

The sulfur compound may, for example, be dimethyl sulfoxide, or sulfolane.

The inorganic solvent may, for example, be liquid carbon dioxide.

The organic acid may, for example, be acetic acid, propionic acid, malic acid, or lactic acid.

One of such media may be used alone, or two or more of the them may be used in combination as a mixture. When two or more of such media are used in combination as a mixture, one of them is preferably water. By using a mixture of media, control of solubility and dispersibility of the (co)polymer may be easy, and control of penetrating properties and wettability to an article and solvent drying speed at the time of manufacture may be easy.

### (Polymerization initiator)

The polymerization initiator may, for example, be a thermal polymerization initiator, an optical polymerization initiator, a radiation polymerization initiator, a radical polymerization initiator, or an ionic polymerization initiator, and is preferably a watersoluble or oil-soluble radical polymerization initiator.

Common polymerization initiators such as an azo polymerization initiator, a peroxide polymerization initiator, a redox polymerization initiator, etc. are used as a radical polymerization initiator depending on the polymerization temperature. The radical polymerization initiator is particularly preferably an azo polymerization initiator, and the azo polymerization initiator is further preferably a salt of an azo compound when polymerization is carried out in an aqueous medium. The polymerization temperature is preferably between 20°C and 150°C.

A molecular weight modifier may be used in the polymerization of the monomer component. The molecular weight modifier is preferably an aromatic compound, a mercapto alcohol or a mercaptan, particularly preferably an alkylmercaptan. A specific example of the molecular weight modifier may be mercaptoethanol, n-octylmercaptan, n-dodecylmercaptan, t-dodecylmercaptan, stearylmercaptan, or α-methylstyrene dimer (CH₂=C(Ph)CH₂C(CH₃)₂Ph, wherein Ph is a phenyl group).

The proportion of monomer (a) is preferably from 10 to 100 mass%, more preferably from 10 to 80 mass%, in the monomer component (100 mass%) from the viewpoint of water/oil repellency and durability of the water/oil repellent composition.

The proportion of monomer (b) is preferably from 0 to 90 mass%, more preferably from 10 to 70 mass%, in the monomer component (100 mass%) from the viewpoint of water/oil repellency and durability of the water/oil repellent composition.

The proportion of monomer (c) is preferably from 0 to 30 mass%, more preferably from 5 to 20 mass%, in the monomer component (100 mass%) from the viewpoint of water/oil repellency and durability of the water/oil repellent composition.

The proportion of monomer (d) is preferably from 0 to 20 mass%, more preferably from 0 to 10 mass%, in the monomer component (100 mass%) from the viewpoint of water/oil repellency and durability of the water/oil repellent composition.

The proportion of monomer (e) is preferably from 0 to 20 mass%, more preferably from 0 to 10 mass%, in the monomer component (100 mass%) from the viewpoint of water/oil repellency and durability of the water/oil repellent composition.

The mass ratio of monomer (a) to monomer (b) (monomer (a)/monomer (b)) is preferably from 8/1 to 1/6, more preferably from 6/1 to 1/4.

The mass ratio of monomer (a) to monomer (c) (monomer (a)/monomer (c)) is preferably from 12/1 to 1/1, more preferably from 8/1 to 1/1.

The amount of compound (x) is preferably from 0.1 to 10 parts by mass, more preferably from 0.1 to 5 parts by mass, per 100 parts by mass of the monomer component.

The total amount of the surfactants is preferably from 1 to 6 parts by mass, more preferably from 1 to 5 parts by mass, per 100 parts by mass of the monomer component.

The amount of the polymerization initiator is preferably from 0.1 to 1.0 parts by mass, more preferably from 0.1 to 0.8 parts by mass, per 100 parts by mass of the monomer component.

### (Water/oil repellent composition)

The water/oil repellent composition produced by the method of the present invention may contain additives.

Additives may, for example, be a penetrant, an anti-foaming agent, a water absorbent, an anti-stat, an anti-crease agent, a softener, a film-forming aid, a watersoluble polymer (polyacrylamide, polyvinyl alcohol, etc.), a thermosetting agent (melamine resin, urethane resin, etc.), an epoxy curing agent (isophthalic acid hydrazide, adipic acid dihydrazide, sebacic acid dihydrazide, dodecanedioic acid dihydrazide, 1,6-hexamethylene bis(N,N-dimethylsemicarbazide, 1,1,1',1'-tetramethyl-4,4'-(methylene-di-p-phenylene)disemicarbazide, spiroglycol, etc.), a thermosetting catalyst, a cross-linking catalyst, a synthetic resin, a fiber stabilizer, etc.

The water/oil repellent composition of the present invention may be used alone, or used with another water/oil repellent composition by mixture. For example, it is used with a fluorinated soil release agent which has much hydrophilic component and little water repellent property, whereby wash-durable water/oil repellent soil-release finishing is possible.

And, the content in the water/oil repellent composition (the content when the solid content concentration is 20 mass%) of perfluorooctanoic acid (PFOA), perfluorooctane sulfonate (PFOS), their precursors and their analogs, environmental impact of which is pointed out, is reduced to under the detection limit of analysis value of LC-MS/MS (liquid chromatography-tandem mass spectrometry) in the method disclosed in Japanese Patent Application No. 2007-333564.

Regarding the water/oil repellent composition, the (co)polymer is preferably dispersed particles in the medium. The average particle size of the (co)polymer is preferably from 10 to 1,000 nm, more preferably from 10 to 300 nm, particularly preferably from 10 to 200 nm. When the average particle size is within such a range, a surfactant, a dispersant, etc. are not required in large amounts, water/oil repellency is good, dyed fabrics can be treated without color dulling, and the particles are stably-dispersed without precipitation in the medium. The average particle size of the (co)polymer is measured by a dynamic light scattering device, an electron microscope, etc.

The solid content concentration of the water/oil repellent composition is preferably from 25 to 40 mass% in the water/oil repellent composition (100 mass%) immediately after the production thereof.

The solid content concentration of the water/oil repellent composition is preferably from 0.2 to 5 mass% in the water/oil repellent composition (100 mass%) at the time of treating articles.

The solid content concentration of the water/oil repellent composition is calculated from the mass of the water/oil repellent composition before heating and the mass of it after drying in the convection-drying machine at the temperature of 120°C for 4 hours.

Solid content concentration of water/oil repellent composition (mass%) = (mass of water/oil repellent composition after heating at 120°C for 4 hours / mass of water/oil repellent composition before heating) x 100

In the above described method for producing a water/oil repellent composition of the present invention, a monomer component containing monomer (a) is polymerized in coexistence with compound (x) in a medium in the presence of a surfactant and a polymerization initiator, whereby it is possible to produce a water/oil repellent composition which can impart water/oil repellency to a surface of an article and is excellent in durability (wash durability and heavy-rain durability). In particular, a water/oil repellent composition obtained by using compound (x) has more heavy-rain durability than a conventional water/oil repellent composition which is produced without compound (x).

It is considered that this is because compound (x) coexists with the water/oil repellent composition whereby a polyfluoroalkyl group having a low surface energy is introduced to the terminal of the (co)polymer.

### <Article>

The article of the present invention is an article treated with the water/oil repellent composition produced by the method of the present invention.

Examples of the article treated with the water/oil repellent composition include fibers (natural fibers, synthetic fibers, blended fibers, etc.), various fiber products, nonwoven fabrics, resins, paper, leather, metal, stone, concrete, plaster, and glass.

An example of a method for treating the article is to coat or dip the article with the water/oil repellent composition by a publicly-known coating method and then to dry it.

Additionally, such an article may be finished to be antistatic, softening, antibacterial, deodorant or waterproof.

An example of water proofing may be to form a water proof membrane. The water proof membrane may, for example, be a porous membrane obtained from a urethane resin or an acryl resin, a nonporous membrane obtained from a urethane resin or an acryl resin, a polytetrafluoroethylene membrane or a moisture-permeable water proof membrane which is a combination of these membranes.

Fabric products treated with the water/oil repellant composition of the present invention have softened textile because of softness of the coating, and are given water/oil repellency of high quality. And, they have excellent adhesion on the surface, and are given water/oil repellency by curing at a low temperature. And, because deterioration of the performance by friction and washing is small, the initial performance at the treatment can be stably maintained.

Paper treated with the water/oil repellent composition of the present invention has excellent size property, water repellency and oil repellency even when dried under a low-temperature drying condition.

Moreover, when resins, glass or surface of metals is treated with the water/oil repellent composition of the present invention, a water/oil repellent coating film which has good adhesion to an article and good film-forming property is formed.

### EXAMPLES

Now, the present invention will be described in detail with reference to Examples.

Examples 1 to 4 and 7 to 9 are working examples of the present invention, and Examples 6 and 10 are comparative examples.

The evaluation methods for the properties in this Examples are as follows.

### (Water repellency)

Water repellency of a test cloth was measured in accordance with the spray test of JIS L1092-1992. Water repellency was evaluated in grades listed in Table 1. +(-) beside the grade means that the property is slightly better (worse).

**TABLE 1**

| Water repellency level | State of object |
|---|---|
| 100 | No moistening or water drops on the surface |
| 90 | Slight water drops on the surface |
| 80 | Separate partial moistening on the surface |
| 70 | Moistening on the half of the surface |
| 50 | Moistening over the entire surface |
| 0 | Completely wetted |

### (Wash durability)

The test cloth was washed repeatedly for 100 times in accordance with the water-wash method of Annex Table 103 in JIS L0217. Next, it was dried in a room at a room temperature of 25°C under a humidity of 60% overnight, and then the water repellency was measured.

### (Oil repellency)

Oil repellency of the test cloth was measured in accordance with the test method of AATCC-TM118-1966. Oil repellency was evaluated with grades listed in Table 2. +(-) besides the grade means that the property is slightly better (worse).

**TABLE 2**

| Oil repellency No. | Test liquid | Surface tension |
|---|---|---|
| | | mN/m(25°C) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-hexadecane | 27.3 |
| 2 | Nujol 65 part/hexadecane 35 part | 29.6 |
| 1 | Nujol | 31.2 |
| 0 | Oil repellency less than that of No. 1 | - |

### (Wash durability)

The test cloth was washed repeatedly for 20 times in accordance with the water-wash method of Annex Table 103 in JIS L0217. Next, it was dried in a room at a room temperature of 25°C under a humidity of 60% overnight, and then the water repellency was measured.

### (Heavy-rain durability)

Heavy-rain durability of the test cloth was measured by a rainfall test under the condition that rainfall amount was 100 cc/min, rainfall temperature was 20°C, and testing time was 1 or 20 minutes, by the method described in JIS L1092(C) (Bundesmann Test). Water repellency was evaluated with 5 grades of from 1 to 5. A higher the grade is, the better the water repellency is. The cloth of grade 3 or more is regarded to have water repellency.

### (Wash durability)

The test cloth was washed repeatedly for five times in accordance with the water-wash method of Annex Table 103 in JIS L0217. After washed, the test cloth was heated and dried at 120°C for 60 seconds through a pintenter, and then its heavy-rain durability was measured.

Abbreviations in the Examples, e.g. a monomer, are as follows:

### (Abbreviations)

Monomer (a):
FMA: C₆F₁₃C₂H₄OCOC(CH₃) = CH₂,
CI-FA: C₄F₉C₂H₄OCOCCl = CH₂,

Monomer (b):
STA: Stearyl acrylate
VA: Behenyl acrylate

Monomer (c):
VCM: Vinyl chloride
VdCl: Vinylidene chloride

Monomer (d):
D-BI: Adduct of 3,5-dimethylpyrazole of 2-isocyanatoethyl methacrylate (the following formula (7)) 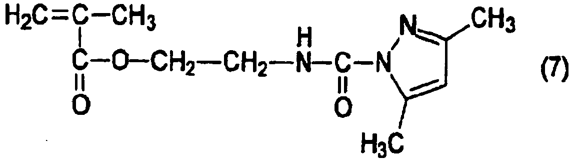
PFM-3: Polycaprolactone ester of hydroxyethyl methacrylate (average moles of caprolactone added: 3.7 mols)
NMAM: N-Methylolacrylamide
TAC: Triallyl cyanurate

Molecular weight modifier:
DoSH: n-Dodecyl mercaptan

Compound (x):
C6SH-1: 1H,11H,2H,2H-perfluorooctane thiol
C6SH-2: C₆F₁₃C₂H₄OCOCH₂SH

Surfactant s¹:
PEO-20: Polyoxyethylene oleyl ether (about-20-mol ethylene oxide adduct)
PEO-30: Ethylene oxide/propylene oxide polymer (about-30-mol ethylene oxide adduct)

Surfactant s³:
PEPP-1 0: Polyoxyethylene/polyoxypropylene/polyoxyethylene block copolymer (molecular weight: 1,280; proportion of polyoxypropylene: 20 mass%)
PEPP-33: Polyoxyethylene/polyoxypropylene/polyoxyethylene block copolymer (molecular weight: 3,300; proportion of polyoxypropylene: 40 mass%)

Surfactant s²:
AEO-10: Ethylene oxide adduct of acetylene glycol (moles of ethylene oxide added: 10 mols)

Surfactant s⁷:
STMAC: Monostearyltrimethylammonium chloride
CMAC: Coco alkyltrimethylammonium chloride

Medium:
Water: lon-exchanged water
DPG: Dipropylene glycol

### Polymerization initiator

VA061-B: 10 mass% aqueous solution of acetate of 2,2'-azo-bis[2-(2-imidazolin-2-yl)propane] (manufactured by Wako Pure Chemical Industries, Ltd., VA061)

### EXAMPLE 1

89.5 g of FMA, 15.6 g STA, 4.8 g of D-BI, 2.17 g of C6SH-1, 3.00 g of PEO-30, 0.6 g of PEPP-33, 0.6 g of STMAC, 181.6 g of water and 36.2 g of DPG were put into a glass beaker, heated at 55°C for 30 minutes, and then mixed by a homomixer (manufactured by NIHONSEIKI KAISHA Ltd., BIO MIXER) to obtain a mixed solution.

The mixed solution was treated by a high-pressure emulsification equipment (manufactured by APV Rannie, Mini-Lab) at 50°C and 40 MPa to obtain an emulsion. 300 g of the obtained emulsion was put into a glass reactor, and was cooled to 30°C or lower. 10.9 g of VdCl and 5.17 g of 10 mass% aqueous solution of VA061-B were added into the emulsion. Next, the gas phase was replaced with nitrogen. The reaction mixture was heated at 65°C for 15 hours with stirring, and a copolymer emulsion of a solid content concentration of 33.6 mass% was obtained. Monomers, compound (x), types of surfactants and their charged amounts are shown in Table 3. The proportions of the monomers, the amount of compound (x) and the solid content concentration are shown in Table 4.

After the copolymer emulsion was diluted with tap water to adjust the solid content concentration to 1.0 mass%, trimethylol melamine resin (manufactured by Dainippon Ink and Chemicals, Inc., BECKAMINE M-3) as a thermosetting agent and an organic amine salt catalyst (manufactured by Dainippon Ink and Chemicals, Inc., BECKAMINE ACX) as a thermosetting catalyst were added so that each concentration would be 0.3 mass% in the water/oil repellent composition thereby to obtain a water/oil repellent composition.

A dyed nylon-cloth and a dyed polyester-cloth were dipped in the water/oil repellent composition, and the cloth were nipped to a wet pick-up of 35 mass% and 86 mass%, respectively. These cloth were dried at 110°C for 90 seconds, and then at 170°C for 60 seconds to obtain test cloth. Water repellency, oil repellency and heavy-rain durability of the test cloth were measured. The results are shown in Tables 5 and 6.

### EXAMPLES 2 to 4

A copolymer emulsion was obtained in the same manner as Example 1 except that monomers, compound (x), types of surfactants and their charged amounts were changed to the types and the amounts shown in Table 3. The proportions of the monomers, the amount of compound (x) and the solid content concentration are shown in Table 4.

A water/oil repellent composition was obtained in the same manner as in Example 1 except for using such an emulsion.

Test cloth were obtained in the same manner as in Example 1 except for using such a water/oil repellent composition. Water repellency, oil repellency and heavy-rain durability of the cloth were measured. The results are shown in Tables 5 and 6.

### EXAMPLE 6

A copolymer emulsion was obtained in the same manner as Example 5 except that monomers, types of surfactants and their charged amounts were changed to the types and the amounts shown in Table 3 and that the amount of the molecular weight modifier shown in Table 3 was used instead of compound (x). The proportions of the monomers, the amount of compound (x) and the solid content concentration are shown in Table 4.

A water/oil repellent composition was obtained in the same manner as in Example 1 except for using such an emulsion.

Test cloth were obtained in the same manner as in Example 1 except for using such a water/oil repellent composition. Water repellency, oil repellency and heavy-rain durability of the cloth were measured. The results are shown in Tables 5 and 6.

### EXAMPLES 7 to 9

A copolymer emulsion was obtained in the same manner as Example 1 except that monomers, compound (x), types of surfactants and their charged amounts were changed to the types and the amounts shown in Table 3. The proportions of the monomers, the amount of compound (x) and the solid content concentration are shown in Table 4.

Test cloth were obtained in the same manner as in Example 1 except for using such a water/oil repellent composition. Water repellency, oil repellency and heavy-rain durability of the cloth were measured. The results are shown in Tables 5 and 6.

### EXAMPLE 10

A copolymer emulsion was obtained in the same manner as Example 1 except that monomers, types of surfactants and their charged amounts were changed to the types and the amounts shown in Table 3 and that the amount of the molecular weight modifier shown in Table 3 was used instead of compound (x). The proportions of the monomers, the amount of compound (x) and the solid content concentration are shown in Table 4.

A water/oil repellent composition was obtained in the same manner as in Example 1 except for using such an emulsion.

Test cloth were obtained in the same manner as in Example 1 except for using such a water/oil repellent composition. Water repellency, oil repellency and heavy-rain durability of the cloth were measured. The results are shown in Tables 5 and 6.

**TABLE 3**

| Charged amount (g) | | Example | | | | | | | | |
|---|---|---|---|---|---|---|---|---|---|---|
| | | 1 | 2 | 3 | 4 | 6 | 7 | 8 | 9 | 10 |
| (a) | FMA | 89.5 | 89.3 | 89.3 | | 89.3 | 88.1 | 87 | 87 | 88.1 |
| (a) | CI-FA | | | | 89.3 | | | | | |
| (b) | STA | 15.6 | 15.6 | | 15.6 | 15.7 | 15.7 | 14.5 | 14.5 | 15.7 |
| (b) | VA | | | 15.6 | | | | | | |
| (d) | D-BI | 4.8 | 4.8 | 4.8 | 4.8 | 4.8 | 4.8 | 4.8 | 4.8 | 4.8 |
| (d) | TAC | | | | | | 1.21 | | | 1.21 |
| (d) | PFM-3 | | | | | | | 3.6 | | |
| (d) | NMAM | | | | | | | | 3.6 | |
| - | DoSH | | | | | 1.21 | | | | 1.21 |
| (x) | C6SH-1 | 2.17 | | | | | 1.21 | 1.21 | 1.21 | |
| (x) | C6SH-2 | | 2.41 | 2.41 | 2.17 | | | | | |
| s¹ | PEO-20 | | | | | | 1.00 | 1.00 | 1.00 | |
| s¹ | PEO-30 | 3.00 | 3.00 | 3.00 | 3.00 | 3.00 | | | | 3.00 |
| s² | AEO-10 | | | | | | 2.00 | 2.00 | 2.00 | |
| s⁷ | STMAC | 0.6 | 0.6 | 0.6 | 0.6 | 0.6 | | | | 0.6 |
| s⁷ | CMAC | | | | | | 0.6 | 0.6 | 0.6 | |
| s³ | PEPP-10 | | | | | | 0.6 | 0.6 | 0.6 | |
| s³ | PEPP-33 | 0.6 | 0.6 | 0.6 | 0.6 | 0.6 | | | | 0.6 |
| (c) | VCM | | | | | 15.7 | | | | |
| (c) | VdCl | 10.9 | 10.9 | 10.9 | 10.9 | | 10.9 | 10.9 | 10.9 | 10.9 |

**TABLE 4**

| | | Example | | | | | | | | |
|---|---|---|---|---|---|---|---|---|---|---|
| | | 1 | 2 | 3 | 4 | 6 | 7 | 8 | 9 | 10 |
| Proportion (mass%) in monomer component (100 mass%) | | | | | | | | | | |
| (a) | FMA | 68 | 67.9 | 67.9 | | 63.2 | 66.9 | 66.1 | 66.1 | 66.9 |
| (a) | CI-FA | | | | 67.9 | | | | | |
| (b) | STA | 11.8 | 11.9 | | 11.9 | 11.1 | 11.9 | 11.0 | 11.0 | 11.9 |
| (b) | VA | | | 11.9 | | | | | | |
| (c) | VCM | | | | | 11.1 | | | | |
| (c) | VdCl | 8.3 | 8.3 | 8.3 | 8.3 | | 8.3 | 8.3 | 8.3 | 8.3 |
| (d) | D-Bl | 3.6 | 3.7 | 3.7 | 3.7 | 3.4 | 3.6 | 3.6 | 3.6 | 3.6 |
| (d) | TAC | | | | | | 0.9 | | | 0.9 |
| (d) | PFM-3 | | | | | | | 2.7 | | |
| (d) | NMAM | | | | | | | | 2.7 | |

| Part by mass per 100 parts by mass of monomer component | | | | | | | | | | |
|---|---|---|---|---|---|---|---|---|---|---|
| - | DoSH | | | | | 0.9 | | | | 0.9 |
| (x) | C6SH-1 | 1.6 | | | | | 0.9 | 0.9 | 0.9 | |
| (x) | C6SH-2 | | 1.8 | 1.8 | 1.7 | 1.5 | | | | |
| Solid content (mass%) | | 33.6 | 32.0 | 31.4 | 30.9 | 32.2 | 33.6 | 33.6 | 32.7 | 31.2 |

**TABLE 5**

| Base cloth | Nylon | | | | | | | |
|---|---|---|---|---|---|---|---|---|
| Measure | Water repellency level | | Oil repellency No. | | Bundesmann test | | | |
| | | | | | Initial | | Post-washing | |
| Frequency of washing | 0 | 100 | 0 | 20 | 0 | 0 | 5 | 5 |
| Rainfall testing time (min.) | - | - | - | - | 1 | 20 | 1 | 20 |
| Ex. 1 | 100 | 90 | 6- | 5+ | 5 | 5 | 4.5 | 4 |
| Ex. 2 | 100 | 90 | 6- | 5+ | 5 | 5 | 4.7 | 4.5 |
| Ex. 3 | 100 | 100 | 6- | 5 | 5 | 5 | 4.5 | 4 |
| Ex. 4 | 100 | 90 | 6 | 5 | 5 | 5 | 4.5 | 4 |
| Ex. 6 | 100 | 80 | 6- | 3- | 5 | 4.5 | 4 | 2.5 |
| Ex. 7 | 100 | 90+ | 6- | 5 | 5 | 4 | 4.9 | 3.5 |
| Ex. 8 | 100 | 90 | 6- | 5 | 4.9 | 4 | 4.9 | 3.5 |
| Ex. 9 | 100 | 90+ | 6- | 5 | 5 | 4 | 5 | 3.5 |
| Ex. 10 | 100 | 80 | 5- | 4- | 5 | 2.5 | 3 | 1 |

**TABLE 6**

| Base cloth | Polyester | | | | | | | |
|---|---|---|---|---|---|---|---|---|
| Measure | Water repellency level | | Oil repellency No. | | Bundesmann test | | | |
| | | | | | Initial | | Post-washing | |
| Frequency of washing | 0 | 100 | 0 | 20 | 0 | 0 | 5 | 5 |
| Rainfall testing time (min.) | - | - | - | - | 1 | 20 | 1 | 20 |
| Ex. 1 | 100 | 80 | 6- | 5+ | 5 | 5 | 5 | 5 |
| Ex. 2 | 100 | 80+ | 6- | 5+ | 5 | 5 | 5 | 4.5 |
| Ex. 3 | 100 | 80+ | 6- | 5 | 5 | 5 | 5 | 4.5 |
| Ex. 4 | 100 | 80 | 6 | 5 | 5 | 5 | 5 | 4 |
| Ex. 6 | 100 | 80 | 6- | 3- | 5 | 3 | 5 | 2 |
| Ex. 7 | 100 | 80 | 6- | 5 | 5 | 4 | 4.9 | 3 |
| Ex. 8 | 100 | 80+ | 6- | 5 | 5 | 4 | 4.9 | 3.2 |
| Ex. 9 | 100 | 80 | 6- | 5 | 4.9 | 4 | 4.9 | 3 |
| Ex. 10 | 100 | 70 | 5- | 4- | 5 | 2.5 | 5 | 1.5 |

### INDUSTRIAL APPLICABILITY

The water/oil repellent composition of the present invention is useful as a water/oil repellent agent for fiber products (clothing items (sportswear, coats, blousons, work clothes, uniforms, etc.), bags, industrial materials, etc.), nonwoven fabrics, leather items, stone materials, concrete building materials, etc. It is also useful as a coating agent for filtering materials, organic solvent of which is used in the presence of a liquid or a vapor, a surface-protecting agent, a coating agent for electronics or an antifouling coating agent. Further, it is useful also for an application to give water/oil repellency wherein it is mixed with polypropylene, nylon, etc., and then molded and shaped into fibers.

## Claims

1. A method for producing a water/oil repellent composition, which comprises polymerizing a monomer component comprising the following monomer (a) and the following monomer (b) in coexistence with the following compound (x) in a medium in the presence of a surfactant and a polymerization initiator:
monomer (a): a compound of the following formula (1):
(Z-Y)ₙX (1)
wherein Z is a C₁₋₆ perfluoroalkyl group, Y is a bivalent organic group or a single bond, n is 1 or 2, and X is one of groups of the following formulae (3-1) to (3-5) when n is 1, or the following formula (4-4) when n is 2;
-CR=CH₂ (3-1)
-C(O)OCR=CH₂ (3-2)
-OC(O)CR=CH₂ (3-3)
-OCH₂-ϕ-CR=CH₂ (3-4)
-OCH=CH₂ (3-5)
wherein R is a hydrogen atom, a methyl group or a halogen atom, and ϕ represents a phenylene group;
-OC(O)CH=CHC(O)O- (4-4);
monomer (b): a monomer having no polyfluoroalkyl group and having a hydrocarbon group having at least 14 carbon atoms.
compound (x): a compound of the following formula (5):
R^{f1}-(CH₂)_{b}-Q-(CH₂)ₐ-SH (5)
wherein R^{f1} is a C₁₋₃₀ polyfluoroalkyl group which may have -0-, -OC(O)-, -C(O)O- or -OH, Q is a bivalent organic group or a single bond, a is an integer of from 1 to 20, and b is an integer of from 0 to 20.

2. The method for producing a water/oil repellent composition according to Claim 1, wherein the above R^{f1} is a C₁₋₆ polyfluoroalkyl group.

3. The method for producing a water/oil repellent composition according to Claim 1 or 2, wherein the above Q is -C(O)O-, -OC(O)-, -C(O)N(R¹)-, -SO₂N(R¹)- or a single bond, wherein R¹ is a hydrogen atom or a C₁₋₄ alkyl group.

4. The method for producing a water/oil repellent composition according to any one of Claims 1 to 3, wherein the above surfactant comprises a nonionic surfactant and a cationic surfactant.

5. The method for producing a water/oil repellent composition according to any one of Claims 1 to 4, wherein the above polymerization initiator is a radical polymerization initiator.

6. The method for producing a water/oil repellent composition according to any one of Claims 1 to 5, wherein the above monomer component further contains the following monomer (c):
monomer (c): at least one monomer selected from the group consisting of vinyl halide, vinylidene halide and a monomer of the following formula (6):
CH₂=CR²-OC(O)R³ (6)
wherein R² is a hydrogen atom or a methyl group, and R³ is a C₁₋₈ alkyl group.

7. The method for producing a water/oil repellent composition according to any one of Claims 1 to 6, wherein the above monomer component further contains the following monomer (d):
monomer (d): a monomer having no polyfluoroalkyl group and having a crosslinkable functional group.

8. The method for producing a water/oil repellent composition according to any one of Claims 1 to 7, wherein the proportions of the respective monomers are such that the monomer (a) is from 10 to 100 mass%, the monomer (b) is 40 to 90 mass%, the monomer (c) is from 0 to 30 mass%, and the monomer (d) is from 0 to 20 mass%, in the monomer component (100 mass%).

9. The method for producing a water/oil repellent composition according to any one of Claims 1 to 8, wherein the amount of the compound (x) is from 0.1 to 10 parts by mass, the amount of the surfactant is from 1 to 6 parts by mass, and the amount of the polymerization initiator is from 0.1 to 1.0 parts by mass, per 100 parts by mass of the monomer component.

10. An article treated with the water/oil repellent composition produced by the method defined in any one of Claims 1 to 9.

## Patentansprüche

1. Verfahren zur Herstellung einer Wasser/Öl-abweisenden Zusammensetzung, welches das Polymerisieren einer Monomerkomponente, umfassend das folgende Monomer (a) und das folgende Monomer (b) in Koexistenz mit der folgenden Verbindung (x) in einem Medium in der Gegenwart eines grenzflächenaktiven Mittels und eines Polymerisationsinitiators umfaßt:
Monomer (a): eine Verbindung der folgenden Formel (1):
(Z-Y)ₙX (1)
worin Z eine C₁₋₆ Perfluoralkylgruppe ist, Y eine zweiwertige organische Gruppe oder eine Einfachbindung ist, n 1 oder 2 ist und X eine der Gruppen der folgenden Formel (3-1) bis (3-5), wenn n 1 ist, oder der folgenden Formel (4-4) ist, wenn n 2 ist;
-CR=CH₂ (3-1)
-C(O)OCR=CH₂ (3-2)
-OC(O)CR=CH₂ (3-3)
-OCH₂-ϕ-CR=CH₂ (3-4)
-OCH=CH₂ (3-5),
worin R ein Wasserstoffatom, eine Methylgruppe oder ein Halogenatom ist und ϕ eine Phenylengruppe darstellt
-OC(O)CH=CHC(O)O- (4-4).
Monomer (b): ein Monomer, das keine Polyfluoralkylgruppe aufweist und eine Kohlenwasserstoffgruppe mit mindestens 14 Kohlenstoffatomen aufweist.
Verbindung (x): eine Verbindung der folgenden Formel (5):
R^{f1}-(CH₂)_{b}-Q-(CH₂)ₐ-SH (5)
worin R^{f1} eine C₁₋₃₀ Polyfluoralkylgruppe ist, welche -O-, -OC(O)-, -C(O)O- oder -OH aufweisen kann, Q eine zweiwertige organische Gruppe oder eine Einfachbindung ist, a eine ganze Zahl von 1 bis 20 ist und b eine ganze Zahl von 0 bis 20 ist.

2. Verfahren zur Herstellung einer Wasser/Öl-abweisenden Zusammensetzung gemäß Anspruch 1, wobei das vorstehende R^{f1} eine C₁₋₆ Polyfluoralkylgruppe ist.

3. Verfahren zur Herstellung einer Wasser/Öl-abweisenden Zusammensetzung gemäß Anspruch 1 oder 2, wobei das vorstehende Q -C(O)O-, -OC(O)-, -C(O)N(R¹)-, -SO₂N(R¹)- oder eine Einfachbindung ist, wobei R¹ ein Wasserstoffatom oder eine C₁₋₄ Alkylgruppe ist.

4. Verfahren zur Herstellung einer Wasser/Öl-abweisenden Zusammensetzung gemäß einem der Ansprüche 1 bis 3, wobei das vorstehende grenzflächenaktive Mittel ein nicht-ionisches grenzflächenaktives Mittel und ein kationisches grenzflächenaktives Mittel umfaßt.

5. Verfahren zur Herstellung einer Wasser/Öl-abweisenden Zusammensetzung gemäß einem der Ansprüche 1 bis 4, wobei der vorstehende Polymerisationsinitiator ein radikalischer Polymerisationsinitiator ist.

6. Verfahren zur Herstellung einer Wasser/Öl-abweisenden Zusammensetzung gemäß einem der Ansprüche 1 bis 5, wobei die vorgenannte Monomerkomponente weiter das folgende Monomer (c) enthält:
Monomer (c): mindestens ein Monomer, ausgewählt aus der Gruppe, bestehend aus Vinylhalogenid, Vinylidenhalogenid und einem Monomer der folgenden Formel (6):
CH₂=CR²-OC(O)R³ (6)
worin R² ein Wasserstoffatom oder eine Methylgruppe ist und R³ eine C₁₋₈ Alkylgruppe ist.

7. Verfahren zur Herstellung einer Wasser/Öl-abweisenden Zusammensetzung gemäß einem der Ansprüche 1 bis 6, wobei die vorstehende Monomerkomponente weiter das folgende Monomer (d) enthält:
Monomer (d): ein Monomer, das keine Polyfluoralkylgruppe aufweist und eine vernetzbare funktionale Gruppe aufweist.

8. Verfahren zur Herstellung einer Wasser/Öl-abweisenden Zusammensetzung gemäß einem der Ansprüche 1 bis 7, wobei die Anteile der entsprechenden Monomere derart sind, daß das Monomer (a) von 10 bis 100 Masse-% beträgt, das Monomer (b) bis zu 90 Masse-% beträgt, das Monomer (c) von 0 bis 30 Masse-% beträgt und das Monomer (d) von 0 bis 20 Masse-% in der Monomerkomponente (100 Masse-%) beträgt.

9. Verfahren zur Herstellung einer Wasser/Öl-abweisenden Zusammensetzung gemäß einem der Ansprüche 1 bis 8, wobei die Menge der Verbindung (x) von 0,1 bis 10 Masse-Teile beträgt, die Menge des grenzflächenaktiven Mittels von 1 bis 6 Masse-Teile beträgt und die Menge des Polymerisationsinitiators von 0,1 bis 1,0 Masse-Teile, pro 100 Masse-Teilen der Monomerkomponente, beträgt.

10. Gegenstand, behandelt mit der Wasser/Öl-abweisenden Zusammensetzung, hergestellt durch das Verfahren, wie in einem der Ansprüche 1 bis 9 definiert.

## Revendications

1. Procédé pour produire une composition hydrofuge/ oléofuge, qui comprend la polymérisation d'un composant monomère comprenant le monomère (a) suivant et le monomère (b) suivant en coexistence avec le composé (x) suivant dans un milieu en présence d'un tensioactif et d'un amorceur de polymérisation :
monomère (a) : un composé de formule (1) suivante :
(Z-Y)ₙX (1)
dans laquelle Z est un groupe perfluoroalkyle en C₁ à C₆, Y est un groupe organique divalent ou une liaison simple, n vaut 1 ou 2, et X est l'un des groupes de formules (3-1) à (3-5) suivantes quand n vaut 1, ou de formule (4-4) suivante quand n vaut 2 :
-CR=CH₂ (3-1)
-C(O)OCR=CH₂ (3-2)
-OC(O)CR=CH₂ (3-3)
-OCH₂-ϕ-CR=CH₂ (3-4)
-OCH=CH₂ (3-5)
dans lesquelles R est un atome d'hydrogène, un groupe méthyle ou un atome d'halogène ; et ϕ représente un groupe phénylène ;
-OC(O)CH=CHC(O)O- (4-4)
monomère (b) : un monomère ne comportant pas de groupe polyfluoroalkyle et comportant un groupe hydrocarboné comportant au moins 14 atomes de carbone ;
composé (x) : un composé de formule (5) suivante :
R^{f1}- (CH₂)_{b}-Q- (CH₂)ₐ-SH (5)
dans laquelle R^{f1} est un groupe polyfluoroalkyle en C₁ à C₃₀ qui peut comporter -O-, -OC(O)-, -C(O)O- ou -OH, Q est un groupe organique divalent ou une liaison simple, a est un entier de 1 à 20, et b est un entier de 0 à 20.

2. Procédé pour produire une composition hydrofuge/ oléofuge selon 1a revendication 1, dans laquelle le R^{f1} ci-dessus est un groupe polyfluoroalkyle en C₁ à C₆.

3. Procédé pour produire une composition hydrofuge/ oléofuge selon la revendication 1 ou 2, dans lequel le Q ci-dessus est -C(O)O-, -OC(O)-, -C(O)N(R¹)-, -SO₂N(R¹)- ou une liaison simple, où R¹ est un atome d'hydrogène ou un groupe alkyle en C₁ à C₄.

4. Procédé pour produire une composition hydrofuge/ oléofuge selon l'une quelconque des revendications 1 à 3, dans lequel le tensioactif ci-dessus comprend un tensioactif non-ionique et un tensioactif cationique.

5. Procédé pour produire une composition hydrofuge/ oléofuge selon l'une quelconque des revendications 1 à 4, dans lequel l'amorceur de polymérisation ci-dessus est un amorceur de polymérisation radicalaire.

6. Procédé pour produire une composition hydrofuge/ oléofuge selon l'une quelconque des revendications 1 à 5, dans lequel le composant monomère ci-dessus contient en outre le monomère (c) suivant :
monomère (c) : au moins un monomère choisi dans l'ensemble constitué par un halogénure de vinyle, un halogénure de vinylidène et un monomère de formule (6) suivante :
CH₂=CR²-OC(O)R³ (6)
dans laquelle R² est un atome d'hydrogène ou un groupe méthyle, et R³ est un groupe alkyle en C₁ à C₈.

7. Procédé pour produire une composition hydrofuge/ oléofuge selon l'une quelconque des revendications 1 à 6, dans lequel le composant monomère ci-dessus contient en outre le monomère (d) suivant :
monomère (d) : un monomère ne comportant pas de groupe polyfluoroalkyle et comportant un groupe fonctionnel réticulable.

8. Procédé pour produire une composition hydrofuge/ oléofuge selon l'une quelconque des revendications 1 à 7, dans lequel les proportions des monomères respectifs sont telles que le monomère (a) représente de 10 à 100 % en masse, le monomère (b) représente de 40 à 90 % en masse, le monomère (c) représente de 0 à 30 % en masse, et le monomère (d) représente de 0 à 20 % en masse du composant monomère (100 % en masse).

9. Procédé pour produire une composition hydrofuge/ oléofuge selon l'une quelconque des revendications 1 à 8, dans lequel la quantité du composé (x) est de 0,1 à 10 parties en masse, la quantité du tensioactif est de 1 à 6 parties en masse, et la quantité de l'amorceur de polymérisation est de 0,1 à 1,0 partie en masse, pour 100 parties en masse du composant monomère.

10. Article traité avec la composition hydrofuge/ oléofuge produite par le procédé défini dans l'une quelconque des revendications 1 à 9.
